# FASCICULE DE BREVET EUROPEEN

(11) **EP 3 393 621 B1**
(45) Date de publication et mention de la délivrance du brevet: **05.01.2022**
(21) Numéro de dépôt: 16809983.6
(22) Date de dépôt: 10.11.2016
(51) Int. Cl.: B01D 53/00, B01D 53/22, C10L 3/10, F25J 3/02

(54) **PROCÉDÉ DE PRODUCTION DE BIOMÉTHANE PAR ÉPURATION DE BIOGAZ ISSU D'INSTALLATIONS DE STOCKAGE DE DÉCHETS NON-DANGEREUX ET INSTALLATION POUR LA MISE EN OEUVRE DU PROCÉDÉ**
VERFAHREN ZUR HERSTELLUNG VON BIOMETHAN DURCH REINIGUNG VON BIOGAS AUS ANLAGEN ZUR LAGERUNG UNGEFÄHRLICHER ABFALLSTOFFE UND ANLAGE ZUR DURCHFÜHRUNG DES VERFAHRENS
METHOD FOR PRODUCING BIOMETHANE BY PURIFYING BIOGAS FROM NON-HAZARDOUS WASTE STORAGE FACILITIES AND FACILITY FOR IMPLEMENTING THE METHOD

(30) Priorité: 24.12.2015 FR 1563357
(43) Date de publication de la demande: 31.10.2018
(73) Titulaire: Waga Energy, 38240 Meylan (FR)
(72) Inventeur: PRINCE, Guénaël, 38120 Saint Egreve (FR); LEFEBVRE, Mathieu, 38330 Saint Nazaire Les Eymes (FR); BRIEND, Pierre, 38170 Seyssinet Pariset (FR); PAGET, Nicolas, 38400 Saint Martin D'heres (FR)
(74) Mandataire: Cabinet Laurent & Charras
(86) Numéro de dépôt international: PCT/FR2016/052937
(87) Numéro de publication internationale: WO 2017/109305

(56) Documents cités:
- WO-A1-2011/097162
- WO-A1-2013/052325
- FR-A1- 2 971 331

## Description

L'invention a pour objet un procédé de production de bio méthane par épuration de biogaz issu d'installations de stockage de déchets non-dangereux (ISDND). Elle concerne également une installation pour la mise en oeuvre du procédé.

Plus précisément, la présente invention est relative à un procédé de traitement par couplage d'une perméation membranaire et d'une distillation cryogénique d'un courant gazeux contenant au moins du méthane, du dioxyde de carbone, des gaz de l'air (azote et oxygène) et des polluants (H₂S et composés organiques volatils (COV)). L'objectif est de produire un courant gazeux riche en méthane dont la teneur en méthane est conforme aux besoins de son utilisation et de limiter au maximum l'impact des rejets de CH₄ dans l'atmosphère (gaz à fort pouvoir à effet de serre).

L'invention concerne en particulier l'épuration de biogaz issu des installations de stockage de déchets non-dangereux, ci-après ISDND (Installation de Stockage des Déchets Non Dangereux), dans le but de produire du biométhane conforme à l'injection dans un réseau de gaz naturel ou en utilisation locale comme carburant véhicule.

La digestion anaérobique des déchets organiques présents dans les ISDND produit une quantité importante de biogaz pendant toute la durée d'exploitation de l'ISDND et même plusieurs années après l'arrêt de l'exploitation et la fermeture de l'ISDND. De par ses constituants principaux -méthane et dioxyde de carbone- le biogaz est un puissant gaz à effet de serre ; il constitue aussi, parallèlement, une source d'énergie renouvelable appréciable dans un contexte de raréfaction des énergies fossiles.

Le biogaz contient plusieurs composés polluants et doit être épuré pour permettre une valorisation commerciale. Il existe plusieurs procédés permettant d'effectuer la récupération et la purification du biogaz.

Le biogaz contient majoritairement du méthane (CH₄) et du dioxyde de carbone (CO₂) dans des proportions variables en fonction du mode d'obtention. Dans le cas du biogaz d'ISDND, le gaz contient en outre une proportion de gaz de l'air (azote et oxygène) ainsi que dans une moindre proportion, de l'eau, de l'hydrogène sulfuré, et des composés organiques volatiles (COV).

Selon les matières organiques dégradées, les techniques utilisées et les conditions particulières (climats, typologies..) de chaque ISDND, les proportions des composants du biogaz diffèrent. Néanmoins, en moyenne, le biogaz comporte, sur gaz sec, de 30 à 60% de méthane, de 15 à 50% de CO₂, de 0 à 30% d'azote, de 0 à 6% d'oxygène, de 0 à 1% d'H₂S et de quelques dizaine à quelque milliers de milligrammes par normaux mètres cubes de COV et un certain nombre d'autres impuretés à l'état de trace.

Le biogaz est valorisé de différentes manières. Il peut, après un traitement partiel, être valorisé à proximité du site de production pour fournir de la chaleur, de l'électricité ou les deux cumulées (la cogénération). La teneur importante en dioxyde de carbone réduit son pouvoir calorifique, augmente les coûts de compression et de transport et limite l'intérêt économique de sa valorisation à cette utilisation de proximité.

Une purification plus poussée du biogaz permet sa plus large utilisation. En particulier, une purification poussée du biogaz permet d'obtenir un biogaz épuré aux spécifications du gaz naturel et qui pourra lui être substitué. Le biogaz ainsi purifié est appelé « biométhane ». Le biométhane complète ainsi les ressources de gaz naturel avec une partie renouvelable produite au coeur des territoires. Il est utilisable pour exactement les mêmes usages que le gaz naturel d'origine fossile. Il peut alimenter un réseau de gaz naturel, une station de remplissage pour véhicules. Il peut aussi être liquéfié pour être stocké et transporté sous forme de gaz naturel liquéfié (GNL).

Les modes de valorisation du biométhane sont déterminés en fonction des contextes locaux : besoins énergétiques locaux, possibilités de valorisation en tant que biométhane carburant, existence à proximité de réseaux de distribution ou de transport de gaz naturel notamment. Créant des synergies entre les différents acteurs oeuvrant sur un territoire (agriculteurs, industriels, pouvoirs publics), la production de biométhane aide les territoires à acquérir une plus grande autonomie énergétique.

Il est à noter que, en fonction des pays, les règlementations environnementales imposent souvent des contraintes concernant les rejets à l'atmosphère. Il est en effet nécessaire de mettre en place des technologies permettant de limiter les impacts des gaz à effet de serre (CH₄) et des polluants (H₂S et COV) contenu dans le biogaz. Il est donc important d'avoir un rendement CH₄ élevé (égal, en masse, à la quantité de CH₄ valorisée rapportée à la quantité de CH₄ contenue dans le biogaz) et de prévoir des systèmes de traitement pour l'H₂S et les COV qui évitent les rejets atmosphériques.

Par ailleurs, une problématique supplémentaire reste la présence d'O₂, qui, lors de la séparation du mélange, peut générer une atmosphère explosive pendant les différentes étapes d'enrichissement. Ce risque de création d'un mélange explosif rend le biogaz de décharge particulièrement difficile à épurer de manière sûre et économique.

Le document US 8 221 524 B2 décrit un procédé d'enrichissement en CH₄ d'un gaz, à hauteur de 88% par différente étapes de recyclage. Le procédé consiste à compresser le flux gazeux, puis à le faire passer sur un adsorbant pour éliminer les COV. Le flux gazeux est ensuite soumis à une étape de séparation membranaire puis à une étape d'adsorption modulée en pression (PSA). L'adsorbant mis en oeuvre dans le PSA est du type CMS (carbon molecular sieve) et permet d'éliminer l'N₂ et une petite partie de l'O₂.

Le document EP1979446 décrit un procédé d'épuration de biogaz consistant à éliminer l'H₂S, à compresser le gaz, à le filtrer pour éliminer les particules Le gaz est ensuite soumis à une étape de séparation membranaire pour éliminer le CO₂ et l'O₂, de séchage par passage dans un PSA puis dans différents filtres puis enfin de nouveau dans un PSA pour éliminer le N₂. Le gaz est finalement liquéfié.

Le document US2004/0103782 décrit un procédé d'épuration de biogaz consistant à éliminer l'H₂S, à compresser le gaz, le filtrer pour éliminer les particules, à le soumettre à une étape d'adsorption modulée en pression (PSA) pour éliminer les COV, puis à une séparation membranaire pour éliminer la majeure partie du CO₂ ainsi qu'une fraction de l'O₂.

Le document US 5486227 décrit un procédé de purification et de liquéfaction d'un mélange gazeux consistant à soumettre le flux à une adsorption modulée en température (TSA) pour éliminer l'H₂S notamment, puis à une adsorption modulée en pression (PSA) pour éliminer le CO₂ notamment, puis enfin à une séparation cryogénique pour éliminer l'azote et ne retenir que le méthane.

Les documents US5964923 et US5669958 décrivent un procédé de traitement d'un effluent gazeux consistant à déshydrater le gaz, à le condenser en le passant dans un échangeur, à soumettre le gaz à une séparation membranaire, puis à une séparation cryogénique.

Le document US2010/077796 décrit un procédé de purification consistant à soumettre le flux gazeux à une séparation membranaire, à traiter le perméat dans une colonne à distiller, puis à mélanger le méthane gaz provenant de la colonne, après vaporisation, avec le rétentat obtenu à l'issue de la séparation membranaire.

Les documents US3989478 et FR2917489 décrivent des systèmes cryogéniques pour l'épuration d'un flux riche en méthane. Ces deux systèmes utilisent un PSA pour abattre le CO₂ avant l'étape de liquéfaction. Dans le document US3989478, la régénération des PSA est effectuée par le biais du distillat riche en azote récupéré en tête de colonne de distillation. Dans le document FR2917489, la régénération du PSA est effectuée par le méthane liquide soutiré en bas de colonne de distillation.

Le document EP0772665 décrit l'utilisation d'une colonne de distillation cryogénique pour la séparation du gaz de mine composé principalement de CH₄, CO₂ et N₂.

Le document WO 2013/052325 A1 décrit un procédé de production de méthane combinant une étape d'épuration des COV par le biais d'un PSA, puis de séparation du CO2 par le biais d'un TSA et enfin une distillation cryogénique permettant de supprimer l'O2 et l'N2. La séparation membranaire auquel il est fait référence est une séparation membranaire permettant de supprimer le CO2 et ainsi se substituer au TSA. Elle ne permet pas de supprimer l'O2 et ne résout donc pas le problème de l'explosivité dans la colonne de distillation.

Le document WO 2011/097162 A1 décrit un procédé de production de biométhane. contenant au moins trois étapes que sont la suppression des COV au moyen d'un PSA, la suppression du CO2 au moyen d'une membrane et la suppression du CO2 résiduel au moyen d'un TSA. Le TSA est en outre suivi d'une unité de liquéfaction. Aucune purification en O2 n'est prévue et ce d'autant que le gaz épuré est traité directement dans une unité de liquéfaction.

Le document FR 2 971 331 A1 décrit la possibilité de mettre en oeuvre une distillation cryogénique pour séparer les gaz de l'air du méthane et ainsi diminuer les risques liés à la présence d'oxygène.

Aucun des documents cités ne permet de résoudre le problème de fournir du biométhane sans risque lié à l'O₂, à une concentration en méthane supérieure à 95%, une concentration en CO₂ inférieure à 2,5% et avec un rendement méthane supérieur à 85%.

Le problème que se propose donc de résoudre l'invention est celui de fournir un procédé de purification de biogaz respectant les contraintes ci-dessus, c'est-à-dire un procédé qui soit sûr, avec un rendement optimal, produisant un biométhane de haute qualité substituable au gaz naturel et qui respecte les normes environnementales s'agissant notamment de la destruction des composées polluants comme les COV et des composés à fort pouvoir à effet de serre comme le CH₄. Le gaz ainsi produit pourra être valorisé sous forme ou gazeuse soit en injection dans un réseau de gaz ou alors pour des applications de mobilité.

Pour résoudre ce problème, le Demandeur a couplé 4 technologies respectivement une épuration des COV par le biais de PSA, une première épuration du CO₂ et d'O₂ par le biais d'une séparation membranaire, une seconde épuration de CO₂ par le biais de PTSA et enfin une épuration de l'N₂ et de l'O₂ par le biais d'une séparation cryogénique.

Plus précisément, l'invention a pour objet un procédé de production de bio méthane gazeux par épuration de biogaz issu d'installations de stockage de déchets non-dangereux (ISDND) selon la revendication 1.

Selon une alternative qui n'est pas selon l'invention et dans la suite de la description, on peut substituer le PTSA par un adsorbeur régénéré par soutirage au vide ou dépressurisation.

Dans un mode de réalisation privilégié, on régénère le PSA au moyen du perméat issu d'une première séparation membranaire. De même, on régénère le PTSA au moyen du flux riche en CH₄ ou du distillat riche en N₂ issus de la séparation cryogénique. On oxyde le perméat issu d'une seconde séparation membranaire après l'avoir mélangé ou non avec le distillat riche en azote issu de la séparation cryogénique.

Avantageusement, avant la compression, on sèche le gaz à épurer puis on le soumet à une étape de désulfuration.

L'étape de séchage consiste à surpresser de 20 à quelques centaines de millibars (500 mbar relatif maximum) le gaz, permettant en outre d'éviter les entrées d'air dans les tuyauteries. La surpression permet d'effectuer un séchage préliminaire en refroidissant le biogaz entre 0,1 et 10 °C, pour condenser la vapeur d'eau. Le flux de gaz sortant a donc une pression comprise entre 20 et 500 mbar et un point de rosée compris entre 0.1°C et 10 °C à la pression de sortie.

L'étape de désulfuration permet d'assurer le captage de l'H₂S afin de répondre aux exigences de qualité du réseau et d'éviter la dégradation trop rapide des matériaux dans la suite du procédé. De plus, il est important d'avoir une étape de captage qui fixe l'H2S sous une forme stable (telle que le soufre solide) pour éviter toute émission nuisible pour la santé et pour l'environnement (nuisance olfactive, formation de SOx). Ce traitement est effectué de préférence avec des charbons actifs ou des hydroxydes de fer dans des cuves aux volumes adaptés à la quantité d'H₂S à traiter. L'H2S est ainsi transformé en soufre solide. Le flux de gaz sortant contient en pratique moins de 5 mg/Nm³ d'H₂S.

Selon le procédé, on comprime ensuite le flux gazeux à traiter. La compression est effectuée à une pression comprise entre 8 et 24 bars. Cette pression est nécessaire pour permettre le fonctionnement des étapes suivantes et diminuer la taille des équipements. La compression s'effectue avantageusement avec un compresseur à vis lubrifiée. La mise en oeuvre de ce type de compresseur donne la possibilité de récupérer éventuellement la chaleur sur le circuit de refroidissement de l'huile. Dans un mode de réalisation préféré et comme il sera vu par la suite, la chaleur est récupérée pour réchauffer le gaz qui servira à regénérer le PTSA.

L'étape suivante consiste à épurer le flux gazeux des COV. Pour ce faire, on fait passer le flux de gaz à épurer dans au moins un adsorbeur modulé en pression (PSA) chargé en adsorbants aptes à adsorber réversiblement les COV. Cette étape permet d'épurer le biogaz des COV (hydrocarbures légers, mercaptans, siloxanes...) qui sont incompatibles avec les exigences de qualité du réseau et qui risquent de polluer les étapes suivantes d'épuration (notamment les membranes).

Avantageusement, on utilise 2 PSA de manière à pouvoir mettre en oeuvre le procédé en continu. En effet, lorsque le premier PSA est saturé en COV, on le substitue par le second PSA qui lui-même a été préalablement régénéré.

De préférence, on régénère le(s) PSA par le perméat issu de la séparation membranaire. Ce perméat est composé principalement de CO₂ et d'une très faible teneur en CH₄. En pratique, le flux de gaz en sortie de régénération est oxydé. Dans un mode de réalisation avantageux, il est préalablement mélangé avec le distillat riche en N₂ issu de la séparation cryogénique, le mélange étant ensuite oxydé. De manière alternative, le flux de gaz en sortie de régénération de PSA et le distillat riche en N₂ issu de la séparation cryogénique sont oxydés séparément.

Dans l'étape suivante du procédé de l'invention, on épure le CO₂ du flux gazeux. Pour ce faire, on soumet le flux gazeux appauvri en COV sortant du PSA à au moins une séparation membranaire pour séparer partiellement le CO₂ et l'O₂ du flux gazeux. Plus précisément, la séparation sélective des membranes permet d'effectuer une première épuration efficace du biogaz en séparant une grande partie du CO₂ (plus de 90%) ainsi qu'une partie de l'O₂ (50% environ et de manière générale au moins 30%, avantageusement entre 30 et 70%). Les performances de séparation de la membrane vis-à-vis du CO₂ et de l'O₂ seront fonction de la perméabilité de la membrane vis-à-vis de ces gaz. L'homme du métier sera à même de choisir la membrane remplissant les objectifs ci-dessus. En particulier, on choisira avantageusement des membranes en polyimide. L'épuration membranaire peut être composée d'1, 2, 3 ou 4 étages de membranes suivant les caractéristiques du biogaz. Cette étape permet de produire un gaz avec moins de 3% de CO₂ et avec un rendement CH₄ supérieur à 90 %.

Dans un mode de réalisation particulier, on effectue deux séparations membranaires successives. Plus précisément :
- on soumet le flux gazeux appauvri en COV sortant du PSA à une première séparation membranaire,
- on régénère le PSA au moyen du perméat issu de ladite première séparation membranaire,
- on soumet le rétentat issu de la première séparation à une seconde séparation membranaire,
- on reintroduit le perméat issu de la seconde séparation membranaire en amont de la compression.

La recirculation du perméat issu de la seconde séparation membranaire qui contient encore du CO₂ et du CH₄ permet ainsi d'améliorer le rendement en CH₄. En pratique, la réintroduction du perméat est effectuée en entre la cuve de désulfuration et le compresseur. L'étape suivante du procédé de l'invention consiste à effectuer une épuration additionnel du CO₂ encore présent dans le flux gazeux. En effet, la seule séparation membranaire n'est pas suffisante pour atteindre une teneur en CO₂ dans le gaz épuré de 50 ppm avant l'étape de séparation cryogénique. La valeur de 50 ppm constitue la valeur limite au-delà de laquelle il existe un risque de formation de cristaux de CO₂ pouvant boucher les échangeurs cryogéniques.

Cette étape est réalisée par un PTSA. Le choix d'un PTSA permet de réduire la taille de la cuve et de réduire les temps de cycle.

L'adsorbant sera notamment choisi dans le groupe comprenant les zéolites.

Avantageusement, on utilise 2 PTSA de manière à pourvoir mettre en oeuvre le procédé en continu. En effet, lorsque le premier PTSA est saturé en CO₂, on le substitue par le second PTSA qui lui-même a été préalablement régénéré.

La manière de régénérer les PTSA dépend de la nature liquide ou gazeuse du produit final riche en méthane, valorisé.

Lorsque le procédé vise à valoriser du méthane sous forme liquide, ce que ne vise pas l'invention, on peut régénérer le(s) PTSA au moyen d'un débit d'azote résultant de la vaporisation d'une source extérieure d'azote liquide. La vapeur est dans ce cas produite par refroidissement du flux gazeux appauvri en CO₂, sortant du PTSA. Ce mode de réalisation bien que pouvant être mis en oeuvre, n'est pas optimal car il nécessite une source d'azote liquide supplémentaire.

Le procédé trouve un intérêt supplémentaire lorsqu'il vise à produire du méthane sous forme gazeuse. Dans ces conditions :
- on vaporise le flux gazeux riche en CH₄ issu de la séparation cryogénique,
- on régénère le(s) PTSA au moyen du flux gazeux vaporisé riche en CH₄.

Dans le cadre de la production de méthane gazeux, une autre alternative consiste à régénérer le(s) PTSA par le distillat riche en N₂ issu de la séparation cryogénique, ce distillat pouvant être mélangé avec de l'azote vaporisé servant au refroidissement de la tête de colonne par vaporisation d'azote liquide provenant d'une source extérieure.

Avantageusement, on récupère la chaleur générée par la compression du flux gazeux initial pour préchauffer le flux gazeux servant à la régénération du PTSA. Le préchauffage permet ainsi de monter la température du flux gazeux d'une valeur de 30 à 40°C à une valeur de 80 à 90°C.

Le flux de régénération du PTSA peut donc être le flux gazeux vaporisé riche en CH₄ ou le distillat riche en N₂ issu de la séparation cryogénique, ce dernier étant éventuellement mélangé dans la colonne avec l'azote vaporisé servant au refroidissement de la tête de colonne.

Les PTSA sont dimensionnés pour permettre d'éviter que le biométhane produit ne contienne plus de 2.5% de CO₂ afin de garantir une qualité compatible avec les besoins pour la commercialisation.

L'étape suivante du procédé de l'invention consiste à séparer l'azote et l'O₂ puis à récupérer le flux riche en CH₄ résultant de cette séparation. Pour ce faire, on soumet le flux gazeux appauvri en CO₂ sortant du PTSA à une séparation cryogénique dans une colonne de distillation.

Dans un premier mode de réalisation qui ne fait pas partie de l'invention, on récupère le produit final, c'est-à-dire le flux riche en méthane, à l'état liquide.

Dans ces conditions :
- on refroidit le flux gazeux appauvri en CO₂,
- on envoie le flux refroidi dans la colonne de distillation,
- on soutire le liquide riche en méthane de la colonne de distillation.

Le refroidissement du flux est effectué au sein d'un échangeur de chaleur au contact d'une source exterieure d'azote liquide par exemple.

Selon l'invention, on récupère le produit final, c'est-à-dire le flux riche en méthane, à l'état gazeux.

Dans ces conditions et selon une caractéristique essentielle:
- on refroidit le flux gazeux appauvri en CO₂ par échange de chaleur avec le CH₄ liquide soutiré de la colonne de distillation,
- on envoie le flux gazeux ainsi refroidi dans la colonne de distillation,
- on soutire le liquide riche en méthane de la colonne de distillation,
- on vaporise le liquide riche en méthane par échange de chaleur avec le flux gazeux appauvri en CO2 provenant du PTSA.

L'invention a également pour objet une installation pour la production de bio méthane gazeux par épuration de biogaz issu d'installations de stockage de déchets non-dangereux (ISDND) mettant en oeuvre le procédé ci avant décrit.

Dans un mode de réalisation particulier, l'installation comprend :
- une source de biogaz,
- un compresseur apte à compresser le biogaz à une pression de 8 et 24 bars,
- 2 adsorbeurs, avantageusement PSA chargés en adsorbants aptes à adsorber réversiblement les COV,
- 2 étages de membranes séparatrices aptes séparer partiellement le CO₂ et l'O₂ du flux gazeux,
- 2 adsorbeurs, avantageusement PTSA chargés en adsorbants aptes à adsorber réversiblement la majeure partie du CO₂ restant dans le flux gazeux,
- un échangeur de chaleur apte à refroidir le flux gazeux appauvri en CO₂ et à vaporiser le liquide (69) riche en méthane,
- une colonne de distillation.

Les éléments constitutifs de l'installation sont en communication fluidique par le biais de tuyauteries adaptées.

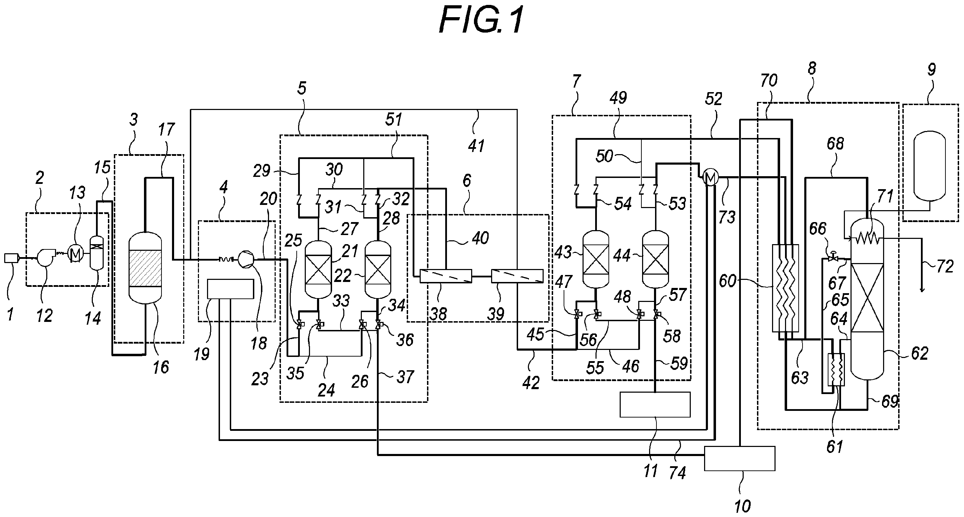

L'invention et les avantages qui en découlent ressortiront bien de l'exemple de réalisation ci-après, à l'appui de la figure 1 annexée.

La figure 1 est une représentation schématique d'une installation de l'invention selon un mode de réalisation particulier.

Selon ce mode de réalisation particulier, le procédé de l'invention vise à produire du biométhane gazeux en optimisant au maximum la dépense énergétique.

L'installation comprend une source de biogaz à traiter (1), une unité de séchage (2), une unité de désulfuration (3), une unité de compression (4), une unité d'épuration de COV (5), une première unité d'épuration de CO₂ (6), une seconde unité d'épuration de CO₂ (7), une unité de cryodistillation (8), une unité de stockage d'azote liquide (9), une unité d'oxydation (10) et enfin une unité de récupération du méthane gazeux (11). Tous les appareils sont reliés entre eux par des tuyaux.

L'unité de séchage (2) comprend un suppresseur (12) et un échangeur de chaleur (13) et un pot séparateur (14). Comme déjà dit, cette étape permet de surpresser de 20 à quelques centaines de millibars (500 mbar relatif maximum) le gaz. Le refroidissement du gaz entre 0,1 et 10 °C permet son séchage. Le flux de gaz sortant (15) a donc une pression comprise entre 20 et 500 mbar et un point de rosée compris entre 0.1°C et 10 °C à la pression de sortie.

L'unité de désulfuration (3) se présente sous la forme d'une cuve (16) chargée en charbons actifs ou en hydroxydes de fer. Cette unité permet d'assurer le captage de l'H₂S et de le transformer en soufre solide. Le flux de gaz sortant (17) contient en pratique moins de 5 mg/Nm3 d'H₂S.

L'unité de compression (4) se présente sous la forme d'un compresseur à vis lubrifiées (18). Ce compresseur comprime le flux gazeux (17) à une pression comprise entre 8 et 24 bars. L'unité comprend en outre un module (19) de récupération de la chaleur générée par le circuit de refroidissement de l'huile. Le flux sortant est désigné sur la figure 1 par la référence (20).

L'unité d'épuration de COV (5) comprend 2 PSA (21, 22). Ils sont chargés en adsorbants choisis spécifiquement pour autoriser l'adsorption des COV, et leur désorption ultérieure lors de la régénération. Les PSA fonctionnent alternativement en mode production et en mode régénération.

En mode production, les PSA (21, 22) sont alimentés en flux gazeux au niveau de leur partie inférieure. Le tuyau dans laquelle circule le flux gazeux (20) se dédouble en deux tuyaux (23, 24), chacun équipé d'une vanne (25, 26) et alimentant la partie inférieure respectivement du premier PSA (21) et du second PSA (22). Les vannes (25, 26) seront alternativement fermées en fonction du niveau de saturation des PSA. En pratique, lorsque le premier PSA est saturé en COV, on ferme la vanne (25) et on ouvre la vanne (26) pour commencer à charger le second PSA (22). De la partie supérieure de chacun des PSA débouche un tuyau respectivement (27 et 28). Chacun d'entre eux se dédouble en 2 tuyaux respectivement (29, 30) et (30, 31). Le flux épuré en COV provenant du premier PSA circule dans le tuyau (29) tandis que le flux épuré en COV provenant du second PSA circule dans le tuyau (31). Les deux tuyaux sont joints pour ne former qu'une seule conduite (51) alimentant l'unité d'épuration de CO2 (6).

En mode régénération, le gaz régénératif circule dans les tuyaux (30, 32). Il ressort au niveau de la partie inférieure des PSA. Ainsi, un tuyau (33) équipé d'une vanne (35) débouche du premier PSA (21). Un tuyau (34) équipé d'une vanne (36) débouche du second PSA (22). Les tuyaux (33, 34) sont joints en amont des vannes (35, 36) pour former un tuyau commun (37). Ce tuyau est connecté à l'unité d'oxydation (10).

La première unité d'épuration de CO₂ (6) combine deux étages de séparation membranaire (38, 39). Les membranes sont choisies pour permettre la séparation d'environ 90% du CO₂ et d'environ 50% de l'O₂.

Le perméat chargé en CO₂, en O₂ et d'une très faible proportion de CH₄ provenant de la première séparation membranaire est utilisé pour régénérer les PSA (21, 22). Il circule dans le tuyau (40) puis alternativement dans les tuyaux (30, 32) en fonction du mode de fonctionnement des PSA. Le rétentat issu de la première séparation est ensuite dirigé vers la seconde séparation membranaire (39). Le perméat issu de la seconde séparation membranaire est recyclé par le biais d'un tuyau connecté au circuit principal en amont du compresseur (18). Cette étape permet de produire un gaz (42) avec moins de 3% de CO₂ et avec un rendement CH₄ > 90 %.

La seconde unité d'épuration de CO₂ (7) combine 2 PTSA (43, 44). Ils sont chargés en adsorbants de type zéolite. Ils sont connectés chacun à des tuyauteries selon un modèle identique à celui des PSA précédemment décrits. Ils fonctionnent également selon un mode production ou un mode régénération. En mode production, le flux gazeux (42) alimente alternativement les PTSA (43, 44) par le biais des tuyaux (45, 46) équipés chacun d'une vanne (47, 48). Le flux gazeux épuré en CO2 issu du PTSA (43) circule ensuite dans le tuyau (49). Le flux gazeux épuré en CO2 issu du PTSA (44) circule ensuite dans le tuyau (50). Les deux tuyaux (49, 50) sont raccordés en un seul tuyau (52) connecté à l'unité suivante.

En mode régénération, le gaz régénératif circule dans les tuyaux (53, 54). Il ressort au niveau de la partie inférieure des PTSA. Ainsi, un tuyau (55) équipé d'une vanne (56) débouche du premier PTSA (43). Un tuyau (57) équipé d'une vanne (58) débouche du second PTSA (44). Les tuyaux (55, 57) sont joints en amont des vannes (56, 58) pour former un tuyau commun (59). Ce tuyau est connecté à l'unité de récupération du méthane gazeux (11).

L'unité de cryodistillation (8) est alimentée par le tuyau (52) dans lequel circule le flux gazeux à épurer. Elle contient 3 éléments respectivement un échangeur de chaleur (60), un rebouilleur (61), une colonne de distillation (62).

L'échangeur (60) est un échangeur à plaques brasées en aluminium ou en acier inoxydable. Il refroidit le flux gazeux (52) par échange thermique avec le flux de méthane liquide (69) soutiré de la colonne de distillation (62). Le flux gazeux (52) est partiellement liquéfié (63). Le flux diphasique (63) assure le rebouillage du rebouilleur de cuve (61) de la colonne (62) et la chaleur produite (64) est transférée à la cuve de la colonne (62). Le flux (63) refroidit dans le rebouilleur (61) et se condense partiellement (65). Le fluide partiellement condensé (65) est détendu au moyen d'une vanne (66) à une pression comprise entre 1.1 et 5 bars absolu. Le fluide alors à l'état liquide (67) est envoyé dans la tête de la colonne (62). La température doit être supérieure à 90.7K pour éviter de solidifier le méthane

Le liquide (67) se sépare ensuite dans la colonne (62) pour former un gaz (68) par le biais du condenseur (71). Le refroidissement du condenseur (71) est assuré par biberonnage d'azote liquide provenant d'une source extérieure (9). L'azote liquide se transforme en azote vaporisé (72). Le gaz (68) cède ses frigories dans l'échangeur (60) au contact du flux gazeux (52) provenant de des PTSA (43, 44). Le flux gazeux obtenu (70) chargé en CO₂ et O₂ est envoyé dans l'unité d'oxydation (10). Dans le mode de réalisation illustré, le flux gazeux (70) est oxydé dans une unité commune d'oxydation (10) avec le flux (37) résultant de la régénération des PSA, chargé en CO₂, O₂ et COV. De manière alternative, on effectue l'oxydation dans des unités distinctes.

Dans un autre mode de réalisation non représenté, on mélange le distillat (68) riche en N₂ issu de la séparation cryogénique avec l'azote vaporisé (72) servant au refroidissement de la tête de colonne (62) pour régénérer les PTSA.

Le liquide (69) de la cuve de la colonne de distillation (62) est envoyé au rebouilleur (61) où il se vaporise partiellement Le gaz formé (64) est renvoyé à la cuve de la colonne (62). Le liquide (69) restant se vaporise dans l'échangeur (60) pour former un produit de méthane gazeux pur (73).

Dans le mode de réalisation représenté, le flux gazeux (73) sert à régénérer les PTSA (43, 44). Le flux (73) est en outre préchauffé grâce à la chaleur générée par le circuit de refroidissement de l'huile du compresseur (18), qui transite depuis le module (19) par le biais d'une conduite (74).

Selon le procédé illustré, on récupère le méthane à l'état gazeux après régénération des PTSA.

## Revendications

1. Procédé de production de biométhane gazeux par épuration de biogaz issus d'installations de stockage de déchets non-dangereux (ISDND) selon lequel :
- on comprime le flux gazeux initial,
- on introduit le flux de gaz à épurer dans au moins un adsorbeur chargé en adsorbants aptes à adsorber réversiblement les COV,
- on soumet le flux gazeux appauvri en COV sortant de l'adsorbeur chargé en adsorbants aptes à adsorber réversiblement les COV à au moins une séparation membranaire mettant en oeuvre de 1 à 4 étages de membrane dont la perméabilité sépare plus de 90% du CO₂ et au moins 30% d'O₂ du flux gazeux,
- on introduit le rétentat issu de la séparation membranaire dans au moins un adsorbeur modulé en température et en pression, chargé en adsorbants aptes à adsorber réversiblement la majeure partie du CO₂ restant,
- on soumet le flux gazeux appauvri en CO₂, sortant de l'adsorbeur chargé en adsorbants aptes à adsorber réversiblement la majeure partie du CO₂ restant à une séparation cryogénique dans une colonne de distillation pour séparer l'O₂ et l'N₂ du flux gazeux selon laquelle :
o on refroidit le flux gazeux appauvri en CO2 par échange de chaleur avec le CH4 liquide soutiré de la colonne de distillation,
o on envoie le flux gazeux ainsi refroidi dans la colonne de distillation,
o on soutire le liquide riche en méthane de la colonne de distillation,
o on vaporise le liquide riche en méthane par échange de chaleur avec le flux gazeux appauvri en CO2 provenant du PTSA.

2. Procédé selon la revendication 1, **caractérisé en ce qu'**on régénère l'adsorbeur chargé en adsorbants aptes à adsorber réversiblement les COV au moyen du perméat issu de la séparation membranaire.

3. Procédé selon l'une des revendications précédentes, **caractérisé en ce que** :
- on soumet le flux gazeux appauvri en COV sortant de l'adsorbeur chargé en adsorbants aptes à adsorber réversiblement les COV à une première séparation membranaire,
- on régénère l'adsorbeur chargé en adsorbants aptes à adsorber réversiblement les COV au moyen du perméat issu de ladite première séparation membranaire,
- on soumet le rétentat issu de la première séparation à une seconde séparation membranaire,
- on réintroduit le perméat issu de la seconde séparation membranaire en amont de la compression.

4. Procédé selon l'une des revendications précédentes, **caractérisé en ce qu'**on régénère le(s) l'adsorbeur modulé en température et en pression chargé en adsorbants aptes à adsorber réversiblement la majeure partie du CO₂ restant au moyen du flux gazeux vaporisé riche en CH₄.

5. Procédé selon l'une des revendications précédentes, **caractérisé en ce qu'**on régénère l'adsorbeur modulé en température et en pression chargé en adsorbants aptes à adsorber réversiblement la majeure partie du CO₂ restant avec le distillat riche en N₂ issu de la séparation cryogénique.

6. Procédé selon l'une des revendications précédentes, **caractérisé en ce qu'**on maintient en froid la tête de colonne de distillation par vaporisation d'azote liquide provenant d'une source extérieure.

7. Procédé selon les revendications 5 et 6, **caractérisé en ce qu'**on mélange dans la colonne le distillat riche en N₂ issu de la séparation cryogénique avec l'azote vaporisé servant au refroidissement de la tête de colonne puis on régénère l'adsorbeur chargé en adsorbants aptes à adsorber réversiblement la majeure partie du CO₂ restant avec ledit mélange.

8. Procédé selon l'une des revendications 1 à 7, **caractérisé en ce qu'**on oxyde le flux gazeux issu de la régénération de l'adsorbeur chargé en adsorbants aptes à adsorber réversiblement les COV.

9. Procédé selon l'une des revendications 1 à 8 **caractérisé en ce qu'**on oxyde le distillat riche en N₂ issu de la séparation cryogénique.

10. Procédé selon les revendications 8 et 9, **caractérisé en ce qu'**on mélange les 2 flux gazeux avant oxydation.

11. Procédé selon l'une des revendications 1 à 10, **caractérisé en ce qu'**on récupère la chaleur générée par la compression du flux gazeux initial pour préchauffer le flux gazeux servant à la régénération de l'adsorbeur chargé en adsorbants aptes à adsorber réversiblement la majeure partie du CO₂ restant.

12. Procédé selon l'une des revendications précédentes, **caractérisé en ce que** l'étape de compression est précédé d'une étape de désulfuration.

13. Procédé selon la revendication 12, **caractérisé en ce que** préalablement à l'étape de désulfuration, on sèche le flux gazeux.

14. Installation pour la production de bio méthane par épuration de biogaz issus d'installations de stockage de déchets non-dangereux (ISDND) mettant en oeuvre le procédé selon l'une des revendications précédentes.

15. Installation pour la production de bio méthane par épuration de biogaz issus d'installations de stockage de déchets non-dangereux (ISDND) selon la revendication 14 comprenant successivement :
- une source de biogaz (1)
- un compresseur (18) apte à compresser le biogaz à une pression de 8 et 24 bars,
- 2 adsorbeurs (21, 22) chargés en adsorbants aptes à adsorber réversiblement les COV,
- 2 étages de membranes séparatrices (38, 39) aptes séparer partiellement le CO₂ et l'O₂ du flux gazeux,
- 2 adsorbeurs (43, 44) modulé en température et en pression chargés en adsorbants aptes à adsorber réversiblement la majeure partie du CO₂ restant dans le flux gazeux,
- un échangeur de chaleur (60) apte à refroidir le flux gazeux appauvri en CO₂ et à vaporiser le liquide (69) riche en méthane,
- une colonne de distillation (62).

16. Procédé ou installation selon l'une des revendications précédentes, **caractérisé en ce que** l'adsorbeur chargé en adsorbants aptes à adsorber réversiblement les COV est un adsorbeur modulé en pression (PSA).

## Patentansprüche

1. Verfahren zur Herstellung von Biomethan durch Reinigung von Biogas aus Lagereinrichtungen für ungefährliche Abfälle (ISDND), gemäß dem:
- der anfängliche Gasstrom komprimiert wird,
- der zu reinigende Gasstrom in mindestens einen Adsorber eingeführt wird, der mit Adsorptionsmitteln beladen ist, welche die VOCs (flüchtige organische Verbindungen) reversibel adsorbieren können,
- der Gasstrom, bei dem VOCs abgereichert wurden und der aus dem Adsorber austritt, der mit Adsorptionsmitteln beladen ist, welche die VOCs reversibel adsorbieren können, mindestens einer Membrantrennung unterzogen wird, wobei 1 bis 4 Membranstufen ausgeführt werden, durch deren Permeabilität mehr als 90% des CO₂ und mindestens 30% des O₂ vom Gasstrom abgetrennt werden,
- das Retentat aus der Membrantrennung in mindestens einen temperatur- und druckmodulierten Adsorber eingebracht wird, der mit Adsorptionsmitteln beladen ist, die den Großteil des verbleibenden CO₂ reversibel adsorbieren können,
- der Gasstrom, bei dem CO₂ abgereichert wurde und der aus dem Adsorber austritt, der mit Adsorptionsmitteln beladen ist, die den Großteil des verbleibenden CO₂ reversibel adsorbieren können, einer kryogenen Trennung in einer Destillationskolonne unterzogen wird, um das O₂ und das N₂ aus dem Gasstrom herauszutrennen, wobei:
∘ der Gasstrom, bei dem CO2 abgereichert wurde, durch Wärmeaustausch mit der aus der Destillationskolonne abgezogenen methanreichen Flüssigkeit gekühlt wird,
∘ der so gekühlte Gasstrom in die Destillationskolonne geleitet wird,
∘ die methanreiche Flüssigkeit aus der Destillationskolonne abgezogen wird,
∘ die methanreiche Flüssigkeit durch Wärmeaustausch mit dem vom PTSA kommenden Gasstrom, bei dem CO₂ abgereichert wurde, verdampft wird.

2. Verfahren gemäß Anspruch 1, **dadurch gekennzeichnet, dass** der Adsorber, der mit Adsorptionsmitteln beladen ist, mittels des Permeats aus der Membrantrennung regeneriert wird.

3. Verfahren gemäß einem der vorhergehenden Ansprüche, **dadurch gekennzeichnet, dass**:
- der Gasstrom, bei dem VOCs abgereichert wurden und der aus dem Adsorber austritt, der mit Adsorptionsmitteln beladen ist, welche die VOCs reversibel adsorbieren können, einer ersten Membrantrennung unterzogen wird,
- der Adsorber, der mit Adsorptionsmitteln beladen ist, welche die VOCs reversibel adsorbieren können, mittels des Permeats aus der ersten Membrantrennung regeneriert wird,
- das Retentat aus der ersten Trennung einer zweiten Membrantrennung unterzogen wird,
- das Permeat aus der zweiten Membrantrennung stromaufwärts von der Komprimierung wieder zugeführt wird.

4. Verfahren gemäß einem der vorhergehenden Ansprüche, **dadurch gekennzeichnet, dass** der/die temperatur- und druckmodulierte(n) Adsorber, der/die mit Adsorptionsmitteln beladen ist/sind, die den Großteil des verbleibenden CO₂ reversibel adsorbieren können, mit Hilfe des methanreichen Gasstroms regeneriert wird/werden.

5. Verfahren gemäß einem der vorhergehenden Ansprüche, **dadurch gekennzeichnet, dass** der temperatur- und druckmodulierte Adsorber, der mit Adsorptionsmitteln beladen ist, die den Großteil des verbleibenden CO₂ reversibel adsorbieren können, mit dem N₂-reichen Destillat aus der kryogenen Trennung regeneriert wird.

6. Verfahren gemäß einem der vorhergehenden Ansprüche, **dadurch gekennzeichnet, dass** der Kopf der Destillationskolonne durch Verdampfung von Flüssigstickstoff, der aus einer externen Quelle stammt, kalt gehalten wird.

7. Verfahren gemäß den Ansprüchen 5 und 6, **dadurch gekennzeichnet, dass** in der Kolonne das N₂-reiche Destillat aus der kryogenen Trennung mit dem verdunsteten Stickstoff, der zur Kühlung des Kopfs der Kolonne dient, vermischt wird und dann der Adsorber, der mit Adsorptionsmitteln beladen ist, die den Großteil des verbleibenden CO₂ reversibel adsorbieren können, mit dem Gemisch regeneriert wird.

8. Verfahren gemäß einem der Ansprüche 1 bis 7, **dadurch gekennzeichnet, dass** der Gasstrom aus der Regeneration des Adsorbers, der mit Adsorptionsmitteln beladen ist, welche die VOCs reversibel adsorbieren können, oxidiert wird.

9. Verfahren gemäß einem der Ansprüche 1 bis 8, **dadurch gekennzeichnet, dass** das N₂-reiche Destillat aus der kryogenen Trennung oxidiert wird.

10. Verfahren gemäß den Ansprüchen 8 und 9, **dadurch gekennzeichnet, dass** die beiden Gasströme vor der Oxidation vermischt werden.

11. Verfahren gemäß einem der Ansprüche 1 bis 10, **dadurch gekennzeichnet, dass** die durch Komprimierung des ursprünglichen Gasstroms erzeugte Wärme rückgewonnen wird, um den Gasstrom vorzuwärmen, der zum Regenerieren des Adsorbers dient, der mit Adsorptionsmitteln beladenen ist, die den Großteil des verbleibenden CO₂ reversibel adsorbieren können.

12. Verfahren gemäß einem der vorhergehenden Ansprüche, **dadurch gekennzeichnet, dass** dem Komprimierungsschritt ein Entschwefelungsschritt vorausgeht.

13. Verfahren gemäß Anspruch 12, **dadurch gekennzeichnet, dass** vor dem Entschwefelungsschritt der Gasstrom getrocknet wird.

14. Anlage zur Herstellung von Biomethan durch Reinigung von Biogas aus Lagereinrichtungen für ungefährliche Abfälle (ISDND), wobei das Verfahren gemäß einem der vorhergehenden Ansprüche umgesetzt wird.

15. Anlage zur Herstellung von Biomethan durch Reinigung von Biogas aus Lagereinrichtungen für ungefährliche Abfälle (ISDND) gemäß Anspruch 14, umfassend nacheinander:
- eine Biogasquelle (1),
- einen Kompressor (18), der das Biogas bei einem Druck von 8 und 24 bar komprimieren kann,
- 2 Adsorber (21, 22), die mit Adsorptionsmitteln beladen sind, welche VOCs reversibel adsorbieren können,
- 2 Stufen von Trennmembranen (38, 39), die das CO₂ und das O₂ teilweise aus dem Gasstrom heraustrennen können,
- 2 temperatur- und druckmodulierte Adsorber (43, 44), die mit Adsorptionsmitteln beladen sind, welche den Großteil des im Gasstrom verbleibenden CO₂ reversibel adsorbieren können,
- einen Wärmetauscher (60), der den Gasstrom, bei dem CO₂ abgereichert wurde, kühlen und die methanreiche Flüssigkeit (69) verdunsten lassen kann,
- eine Destillationskolonne (62).

16. Verfahren oder Anlage gemäß einem der vorhergehenden Ansprüche, **dadurch gekennzeichnet, dass** der Adsorber, der mit Adsorptionsmitteln beladen ist, welche die VOCs reversibel adsorbieren können, ein druckmodulierter Adsorber (PSA) ist.

## Claims

1. A method for producing biomethane by purifying biogas from non-hazardous waste storage facilities (NHWSF) according to which:
- the initial gas flow is compressed,
- the gas flow to be purified is introduced into at least one adsorber loaded with adsorbents capable of reversibly adsorbing the VOCs,
- the VOC-depleted gas flow exiting the adsorber loaded with adsorbents capable of reversibly adsorbing the VOCs is subjected to at least one membrane separation implementing 1 to 4 membrane stages of which the permeability enables more than 90% of the CO₂ and at least 30% of the O₂ to be separated from the gas flow,
- the retentate from the membrane separation is introduced into at least one temperature and pressure-modulated adsorber loaded with adsorbents capable of reversibly adsorbing the majority of the remaining CO₂,
- the CO₂-depleted gas flow exiting the adsorber loaded with adsorbents capable of reversibly adsorbing the majority of the remaining CO₂ is subjected to a cryogenic separation in a distillation column to separate the O₂ and the N₂ from the gas flow, wherein:
o the CO₂-depleted gas flow is cooled down by heat exchange with the methane-rich liquid extracted from the distillation column,
∘ the cooled gas flow is sent to the distillation column,
∘ the methane-rich liquid is extracted from the distillation column,
∘ the methane-rich liquid is vaporized by heat exchange with the CO₂-depleted gas flow coming from the PTSA.

2. The method according to claim 1, wherein the adsorber loaded with adsorbents is regenerated by means of the permeate from the membrane separation.

3. The method according to one of the preceding claims, wherein:
- the VOC-depleted gas flow exiting the adsorber loaded with adsorbents capable of reversibly adsorbing the VOCs is subjected to a first membrane separation,
- the adsorber loaded with adsorbents capable of reversibly adsorbing the VOCs is regenerated by means of the permeate from said first membrane separation,
- the retentate from the first separation is subjected to a second membrane separation,
- the permeate from the second membrane separation is reintroduced upstream of the compression.

4. The method according to one of the preceding claims, wherein the temperature and pressure-modulated adsorber loaded with adsorbents capable of reversibly adsorbing the majority of the CO₂ remaining is regenerated with the methane-rich gas flow

5. The method according to one of the preceding claims, wherein the temperature and pressure-modulated adsorber loaded with adsorbents capable of reversibly adsorbing the majority of the CO₂ remaining is regenerated with the N₂-rich distillate from the cryogenic separation.

6. The method according to one of the preceding claims, wherein the head of the distillation column is kept cold by vaporization of liquid nitrogen from an external source.

7. The method according to claims 5 and 6, wherein in the column, the N₂-rich distillate from the cryogenic separation is mixed with the vaporized nitrogen used for cooling the head of the column then the adsorber loaded with adsorbents capable of reversibly adsorbing the majority of the CO₂ remaining is regenerated with the said mixture.

8. The method according to one of claims 1 to 7, wherein the gas flow from the regeneration of the adsorber loaded with adsorbents capable of reversibly adsorbing the VOCs is oxidized.

9. The method according to one of claims 1 to 8, wherein the N₂-rich distillate from the cryogenic separation is oxidized.

10. The method according to claims 8 and 9, wherein the 2 gas flows are mixed before oxidation.

11. The method according to one of claims 1 to 10, wherein the heat generated by the compression of the initial gas flow is collected in order to preheat the gas flow used for regenerating the adsorber loaded with adsorbents capable of reversibly adsorbing the majority of CO₂ remaining.

12. The method according to one of the preceding claims, wherein the compression step is preceded by a desulfurization step.

13. The method according to claim 12, wherein prior to the desulfurization step, the gas flow is dried.

14. A facility for producing biomethane by purifying biogas from non-hazardous waste storage facilities (NHWSF) implementing the method according to one of the preceding claims.

15. A facility for producing biomethane by purifying biogas from non-hazardous waste storage facilities (NHWSF) according to claim 14 comprising successively:
- a biogas source (1)
- a compressor (18) capable of compressing the biogas to a pressure of 8 and 24 bars,
- 2 adsorbers (21, 22) loaded with adsorbents capable of reversibly adsorbing the VOCs,
- 2 separating membrane stages (38, 39) capable of partially separating the CO₂ and the O₂ from the gas flow,
- 2 temperature and pressure-modulated adsorbers (43, 44) loaded with adsorbents capable of reversibly adsorbing the majority of the CO₂ remaining in the gas flow,
- a heat exchanger (60) capable of cooling the CO₂-depleted gas flow and of vaporizing the methane-rich liquid (69),
- a distillation column (62).

16. The method or facility according to one of the preceding claims, wherein the adsorber loaded with adsorbents capable of reversibly adsorbing the VOCs is a pressure swing adsorber (PSA).
